# EUROPÄISCHE PATENTANMELDUNG

(11) **EP 1 988 410 A1**
(43) Veröffentlichungstag der Anmeldung: **05.11.2008**
(21) Anmeldenummer: 08004686.5
(22) Anmeldetag: 13.03.2008
(51) Int. Cl.: G02B 6/00

(54) **Beleuchtungsvorrichtung**

(30) Priorität: 04.05.2007 DE 102007021519; 31.05.2007 DE 102007025573; 09.06.2007 DE 102007026795
(71) Anmelder: Noctron Soparfi S.A., 8140 Luxembourg (LU)
(72) Erfinder: Diamantidis, Georg, 56307 Dernbach (DE)
(74) Vertreter: Ostertag, Reinhard

(57) **Zusammenfassung**

Bei einer Beleuchtungsvorrichtung sind Leuchtmittel (32; 92) vorgesehen, welche derart angeordnet sind, dass von ihnen emittiertes Licht in eine Lichtleitereinrichtung (12) mit einer Licht abgebenden Sichtfläche (16) eingekoppelt wird. Eine Energieversorgungseinrichtung (60), welche die Leuchtmittel (32; 92) mit Energie versorgt, ist als Paneel-Bauteil ausgebildet und von einer weiteren Außenfläche (58) der Lichtleitereinrichtung (12) getragen.

## Beschreibung

Die Erfindung betrifft eine Beleuchtungsvorrichtung mit den Merkmalen gemäß dem Oberbegriff des Anspruches 1.

Derartige Beleuchtungsvorrichtungen werden in vielen Bereichen zur Ausleuchtung von Innen- oder Außenumgebungen verwendet.

Bei solchen Beleuchtungsvorrichtungen steht meist ein flaches Design im Vordergrund, dessen optische Wirkung jedoch häufig durch die Energieversorgungseinrichtung gestört wird, welche sich baulich von der Lichtleitereinrichtung und den Leuchtmitteln abhebt.

Aufgabe der vorliegenden Erfindung ist es daher, eine Beleuchtungsvorrichtung der eingangs genannten Art zu schaffen, welche in sich geschlossener und einheitlicher wirkt und dennoch insgesamt flach ausgebildet sein kann.

Diese Aufgabe wird durch eine Beleuchtungsvorrichtung mit den Merkmalen gemäß Anspruch 1 gelöst.

Dadurch, dass die Energieversorgungseinrichtung als Paneel-Bauteil ausgebildet ist und von einer weiteren Außenfläche der Lichtleitereinrichtung getragen ist, wird eine Beleuchtungsvorrichtung geschaffen, die insgesamt baueinheitlich wirkt, ohne dass die Energieversorgungseinrichtung als gesondertes Bauteil auffällt. Die Energieversorgungseinheit ist flach ausgebildet und benötigt daher wenig Raum. Insbesondere kann die Energieversorgungseinrichtung gut an der Rückseite der Lichtleitereinrichtung angebracht werden, wodurch die Beleuchtungseinrichtung zwar etwas dicker wird, ein schlanker Gesamteindruck jedoch insgesamt aufrechterhalten werden kann.

Vorteilhafte Weiterbildungen sind in den abhängigen Ansprüchen angegeben.

Durch die Maßnahme nach Anspruch 2 kann eine einheitliche Außenkontur der Beleuchtungsvorrichtung geschaffen werden.

Eine im Wesentlichen autarke Beleuchtungsvorrichtung wird durch die Maßnahmen gemäß den Ansprüchen 3 und 4 ermöglicht.

Weitere Unabhängigkeit im Hinblick auf die Energieversorgung wird auf günstige Weise erzielt, wenn die Energieversorgungseinrichtung gemäß Anspruch 5 ausgebildet ist. Dem Wunsch nach einer einheitlichen optischen Wirkung der Beleuchtungsvorrichtung wird außerdem durch die Maßnahme nach Anspruch 6 Rechnung getragen. Insbesondere kann die Energiespeichereinheit so gut in die ebenfalls als Paneel-Bauteil ausgebildete Energieversorgungseinrichtung integriert werden.

Als Energiespeicher können beispielsweise in den Ansprüchen 7 oder 8 angegebene Komponente verwendet werden.

Eine gute Lichtleistung der Beleuchtungsvorrichtung wird durch die Maßnahme nach Anspruch 9 erreicht. Vorzugsweise entspricht die erste Hauptfläche der Lichtleitereinrichtung der Sichtfläche der Beleuchtungsvorrichtung.

Durch die Maßnahme nach Anspruch 10 wird die Lichtausbeute des von der Beleuchtungsvorrichtung abgegebenen Lichts erhöht.

Die Reflexionswirkung der im Anspruch 10 angegebenen Reflexionseinrichtung wird jeweils durch eine oder mehrere der Maßnahmen nach einem der Ansprüche 11 bis 13 erhöht.

Eine starke Reflexionswirkung wird durch die Maßnahmen nach Anspruch 14 erreicht. Für das Papierblatt gemäß Anspruch 14 haben sich Flächengewichte als günstig erwiesen, wie sie im Anspruch 15 angegeben sind.

Durch die Maßnahme gemäß Anspruch 16 und eine Auswahl des Materials der Reflexionspartikel gemäß den Ansprüchen 17 oder 18 kann die Reflexionswirkung der Reflexionseinrichtung und damit die Leuchtkraft der Beleuchtungsvorrichtung nochmals gesteigert werden. Dabei ist die Maßnahme gemäß Anspruch 18 insbesondere günstig, da so eine vorteilhaft homogene Lichtreflexion gewährleistet ist.

Zur weiteren Vergleichmäßigung der Lichtabgabe ist die zweite Hauptfläche des Lichtleiterelements vorteilhaft wie in Anspruch 20 angegeben ausgebildet.

Das Lichtleiterelement besteht vorzugsweise aus einem der in Anspruch 21 genannten Materialien.

Um den genutzten Anteil des von den Leuchtmitteln emittierten Lichts zu erhöhen, der in das Lichtleiterelement eingekoppelt wird, ist die Maßnahme nach Anspruch 22 vorteilhaft.

Durch die Maßnahmen nach den Ansprüchen 23 und 24 wird eine gute Lichtübertragung von den Leuchtmitteln auf das Lichtleiterelement erreicht. Bei dem Silikonmaterial kann es sich beispielsweise um Silikonöl handeln. Auch eine elastische Silikonmasse kann verwendet werden. Dazu können die Leuchtmittel z. B. zunächst mit flüssigem Silikonöl umhüllt werden, dem ein Härter zugegeben ist, so dass das Silikonöl nach einiger Zeit zu einer elastischen Masse erstarrt.

Wenn die Wellenlänge des von den Leuchtmitteln emittierten Lichts nicht mit einer gewünschten Wellenlänge übereinstimmt, so kann diese durch die Maßnahme nach Anspruch 25 eingestellt werden. Leuchtstoffpartikel umfassen Phosphore und absorbieren auf sie treffende Strahlung und emittieren Strahlung mindestens in einer anderen (längeren) Wellenlänge. Bei einer geeigneten Wahl von Leuchtstoffpartikeln bzw. Leuchtstoffpartikelmischungen kann also die von den Leuchtmitteln emittierte Strahlung in eine Strahlung mit anderem Spektrum umgewandelt werden.

Die Maßnahme nach Anspruch 26 gewährleistet eine homogene Verteilung der Lichtabgabe.

Energiesparende und effiziente Leuchtmittel sind in Anspruch 27 angegeben.

Alternativ ist es günstig, wenn Leuchtmittel gemäß Anspruch 28 verwendet werden.

Ausführungsbeispiele der Erfindung werden nachstehend anhand der Zeichnungen näher erläutert. In diesen zeigen:
- Figur 1: einen Schnitt durch ein erstes Ausführungsbeispiel einer Beleuchtungseinheit längs der Schnittlinie II-II in Figur 2;
- Figur 2: eine teilweise weggebrochene Aufsicht auf die Beleuchtungseinheit von Figur 1; und
- Figur 3: einen der Figur 1 entsprechenden Schnitt durch ein zweites Ausführungsbeispiel einer Beleuchtungseinheit.

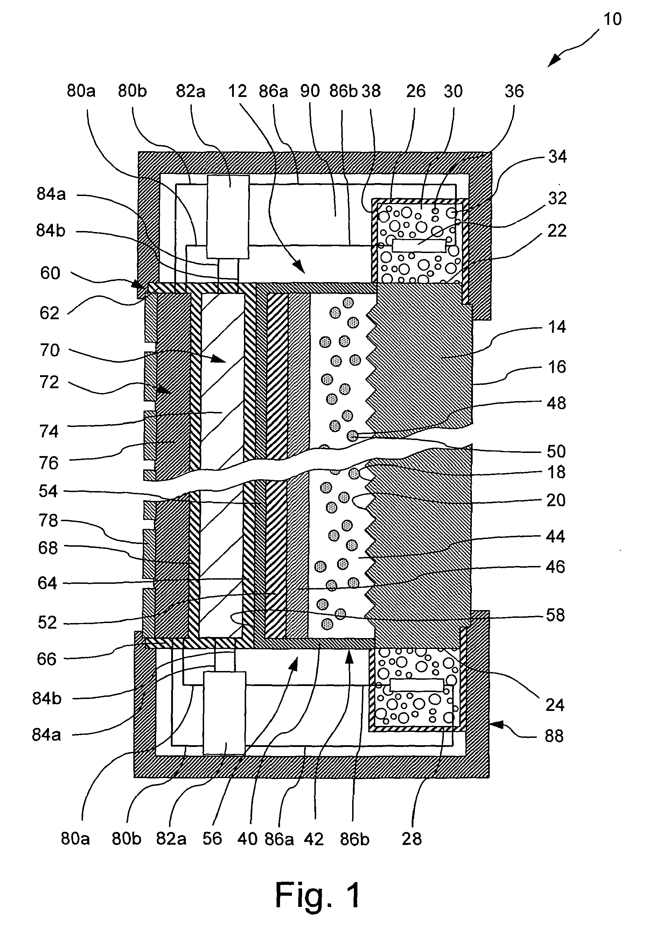

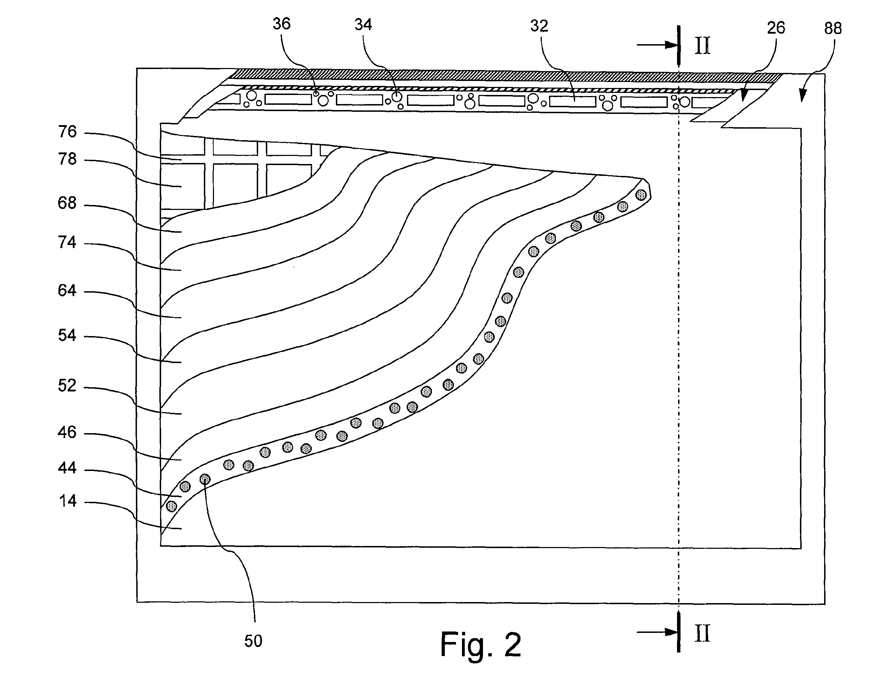

In den Figuren 1 und 2 ist eine Beleuchtungseinheit 10 gezeigt, welche eine Lichtleitereinrichtung 12 umfasst. Die Lichtleitereinrichtung ihrerseits umfasst eine ebene Lichtleiterplatte 14 aus transparentem Acrylglas. Die Lichtleiterplatte 14 kann auch aus einem anderen homogen lichtdurchlässigen Material gefertigt sein, wie beispielsweise aus einem Glas oder einem Epoxidharz. Die Lichtleiterplatte 14 ist vorzugsweise klar.

Die Lichtleiterplatte 14 weist eine erste Hauptfläche 16 auf, welche zugleich die Sichtseite der Beleuchtungseinheit 10 ist und über welche durch die Beleuchtungseinheit 10 erzeugtes Nutzlicht abgestrahlt wird. Auf der gegenüberliegenden Seite hat die Lichtleiterplatte 14 eine zweite Hauptfläche 18, die eine durch Zacken 20 angedeutete Oberflächenrauhigkeit aufweist. Auf deren Zweck wird weiter unten näher eingegangen.

An zwei einander gegenüberliegenden Schmalflächen der Lichtleiterplatte 14, die deren Außenränder 22 und 24 bilden, trägt die Lichtleiterplatte 14 jeweils ein Gehäuse 26 bzw. 28 mit U-förmigem Querschnitt und hier nicht eigens mit einem Bezugszeichen versehenen Stirnwänden. Die jeweils offene Seite des Gehäuses 26 bzw. 28 weist in Richtung des entsprechend benachbarten Außenrandes 22 bzw. 24 der Lichtleiterplatte 12.

Die Gehäuse 26 bzw. 28 werden nachstehend lediglich am Beispiel des in Figur 1 oberen Gehäuses 26 näher erläutert. Die Ausführungen dazu gelten sinngemäß entsprechend für das Gehäuse 28.

Das Gehäuse 26 begrenzt mit dem Außenrand 22 der Lichtleiterplatte 14 einen Innenraum 30, in welchem Leuchtmittel in Form von mehreren Halbleiter-Leuchtchips 32 angeordnet sind, von denen in Figur 2 nur einer mit einem Bezugszeichen versehen ist.

Jeder Halbleiter-Leuchtchip 32 umfasst beispielsweise eine n-leitende Schicht aus n-GaN oder n-InGaN sowie eine p-leitende Schicht aus einem III-V-Halbleitermaterial wie p-GaN. Zwischen einer solchen n-leitenden und einer solchen p-leitenden Schicht kann eine MQW-Schicht angeordnet sein. MQW ist die Abkürzung für "Multiple Quantum Well". Ein MQW-Material enthält ein Übergitter, welches eine gemäß der Übergitterstruktur veränderte elektronische Bandstruktur aufweist und entsprechend Licht bei anderen Wellenlängen emittiert. Über die Wahl der MQW-Schicht lässt sich das Spektrum der von dem p-n-Halbleiter-Leuchtchip abgegebenen Strahlung gezielt beeinflussen.

Der Innenraum 30 des Gehäuses 26 ist mit einer lichtleitenden Flüssigkeit in Form von flüssigem Silikonöl 34 gefüllt, welches in den Figuren in Form von Kreisen angedeutet ist und von den Halbleiter-Leuchtchips 32 emittiertes Licht zum Außenrand 22 der Lichtleiterplatte 14 leitet. Durch das Silikonöl 34 wird zugleich von dem Halbleiter-Leuchtchip 32 erzeugte Wärme nach außen, insbesondere zu den Wänden des Gehäuses 26, abgeführt.

Der Halbleiter-Leuchtchip 32 aus p-GaN/n-InGaN strahlt bei Anlegen einer Spannung ultraviolettes Licht sowie blaues Licht in einem Wellenlängenbereich von 420 nm bis 480 nm ab. Um mit den Halbleiter-Leuchtchips 32 Weißlicht zu erzeugen, sind im Silikonöl 34 feine Leuchtstoffpartikel 36 homogen verteilt, die aus Farbzentren aufweisenden transparenten Festkörpermaterialien hergestellt sind. Diese Leuchtstoffpartikel 36 sind in den Figuren als Kreise angedeutet, welche kleiner sind als die das Silikonöl 34 kennzeichnenden Kreise. Bei den Leuchtstoffpartikeln 36 kann es sich auch jeweils um eine Mischung mehrerer verschiedene Sorten von Phosphorpartikel handeln. Durch die geeignete Wahl von Phosphorpartikeln bzw. Phosphorpartikelmischungen kann also die von den Halbleiter-Leuchtchips 32 emittierte Strahlung in eine Strahlung mit einem Spektrum umgewandelt werden, welches an ein Wunschspektrum angepasst ist. Wenn auf Leuchtstoffpartikel 36 verzichtet wird, strahlt die Beleuchtungseinheit 10 blaues Licht ab.

Die Halbleiter-Leuchtchips 32 sind elektrisch parallel geschaltet, was im Einzelnen nicht dargestellt ist. Die Halbleiter-Leuchtchips 28a können auch in Reihe geschaltet sein, wenn mit einer höheren Versorgungsspannung gearbeitet werden soll.

Die Innenwände des Gehäuses 26 sind mit einer Reflexionsschicht 38 versehen, wodurch auch Licht, welches zunächst von den Halbleiter-Leuchtchips 32 in eine von der Lichtleiterplatte 14 weglaufende Richtung abgestrahlt wird, auf dieselbe bzw. deren Außenrand 22 reflektiert wird.

Wie insbesondere in Figur 1 zu erkennen ist, sitzt die Lichtleiterplatte 14 mit ihrer zweiten Hauptfläche 18 auf einer Umfangswand 40 eines weiteren Gehäuses 42 auf und bildet gleichsam einen Deckel desselben. Das Gehäuse 42 und die zweite Hauptfläche 18 der Lichtleiterplatte 14 begrenzen so einen Innenraum 44.

Auf die zweite Hauptfläche 18 der Lichtleiterplatte 14 ist ein Reflektorsubstrat in Form eines weißen Papierblatts 46 mit einer Koppelschicht 48 aus einem Silikonmaterial aufgebracht, welches durch dunkle Kreise dargestellt ist.

Als Silikonmaterial kommt beispielsweise ein dickflüssiges Silikonöl in Frage. Das weiße Papierblatt 46 wird vor dem Auftragen auf die Lichtleiterplatte 14 mit dem dickflüssigen Silikonöl der Koppelschicht 48 getränkt und dann mit einer Walze unter Druck auf die mattierte zweite Hauptfläche 18 der Lichtleiterplatte 14 aufgepresst. Dabei muss darauf geachtet werden, dass durch den Druck der Walze alle möglicherweise im Silikonöl der Koppelschicht 48 und zwischen dem Papierblatt 46 und der Lichtleiterplatte 14 vorhandenen Luftblasen herausgepresst werden. Das weiße Papierblatt 46 ist durch die Adhäsionswirkung des Silikonöls der Koppelschicht 48 auf der zweiten Hauptfläche 18 der Lichtleiterplatte 14 fixiert.

Anstatt aus dickflüssigem Silikonöl kann die Koppelschicht 48 auch aus einer viskosen elastischen Silikonmasse sein. Dazu kann das Papierblatt 46 vor dem Auftragen auf die Lichtleiterplatte 14 mit dünnflüssigerem Silikonöl getränkt werden, welches vorher mit einem Härter vermischt wurde.
Dadurch kann das Silikonöl nach dem Auftragen des Papierblatts 46 auf die Lichtleiterplatte 14 zu einer elastischen Silikonmasse härten, wobei die Lichtdurchlässigkeit des Silikonmaterials erhalten bleibt.

In einer Abwandlung kann die Koppelschicht 48 aus einem im ausgehärteten Zustand lichtdurchlässigen Harz sein, beispielsweise aus einem Epoxidharz oder einem Polyesterharz, welches ebenfalls durch die Kreise dargestellt ist.

Zur Erhöhung der Reflexionswirkung sind in der Koppelschicht 48 aus Silikonöl oder aus einem Harz Reflexionspartikel 50 homogen verteilt. Die Reflexionspartikel 50 sind als Punkte innerhalb der das Silikonöl bzw. das Harz der Koppelschicht 48 darstellenden Kreise angedeutet.

Als Material für die Reflexionspartikel 50 kommen insbesondere Scandiumoxid oder Zinksulfid in Betracht. Alternativ können Oxide von Lanthan und der Seltenen Erdmetalle, wie z.B. Ceroxid, Neodymoxid, Samariumoxid, Europiumoxid, Gadoliniumoxid, Dysprosiumoxid, Holmiumoxid, Erbiumoxid, Thuliumoxid, Ytterbiumoxid oder Lutetiumoxid als Material für die Reflexionspartikel 50 dienen.

Abhängig von der Art der Reflexionspartikel 50 und deren Konzentration in der Koppelschicht 48 aus Silikonöl oder aus einem Harz kann reflektiertes Licht in unterschiedlichen Intensitäten erhalten werden. Auch verschiedene Farbwirkungen bzw. -temperaturen können durch den gezielten Einsatz der oben genannten Reflexionspartikel 50 erreicht werden.

Wenn die Koppelschicht 48 aus einem Harz ist, in welchem Reflexionspartikel 50 verteilt sind, ist die Reflexionswirkung gegenüber der Verwendung von einer Koppelschicht 48 aus Silikonöl erhöht und der Anteil des nutzbaren Lichtes größer, welches die Beleuchtungseinheit 10 über deren Sichtseite 16 verlässt.

Beispielsweise wird auf die zweite Hauptfläche 18 der Lichtleiterplatte 14 eine Koppelschicht 48 aus einem mit einem Härter versehenen flüssigen Harz aufgetragen, in welchem die Reflexionspartikel 50 homogen verteilt sind. Bevor die Koppelschicht 48 aus Harz aushärtet, wird das Papierblatt 46 aufgelegt, welches dann nach dem Aushärten des Harzes fixiert ist.

Alternativ kann zunächst eine homogene Mischung aus Harz, einem Härter und darin verteilten Reflexionspartikeln 50 auf dem weißen Papierblatt 46 verteilt werden. Das so beschichtete Papierblatt 46 wird dann mit der Beschichtung aus Harz, Härter und Reflexionspartikeln 50 auf die zweite Hauptfläche 18 der Lichtleiterplatte 14 gepresst. Wenn die Lichtleiterplatte 14 aus Acrylglas gefertigt ist, löst das Harz/Härter-Gemisch das Acrylglas während des Aushärtens der Koppelschicht 48 an. Dadurch wird eine Oberflächenrauhigkeit auf der zweiten Hauptfläche 18 der Lichtleiterplatte 14 erzeugt. Daher kann eine Lichtleiterplatte 14 ohne bereits im Vorfeld erzeugte Oberflächenrauhigkeit verwendet werden, wie es vorteilhafter ist, wenn die Koppelschicht 48 aus Silikonöl gebildet ist.

Es ist auch möglich, im Gießverfahren flüssiges Acrylglas auf ein bereits mit ausgehärtetem Harz, in dem die Reflexionspartikel 50 homogen verteilt sind, beschichtetes weißes Blatt Papier 46, welches in eine der Lichtleiterplatte 14 entsprechende Form eingelegt ist, aufzutragen. Eine so erhaltene Lichtleiterplatte 14, welche bereits das weiße Papierblatt 46 sowie die Koppelschicht 48 mit Reflexionspartikeln 50 trägt, kann beispielsweise zwischen 1 mm und 10 mm dick sein.

Auch durch ein Extrusionsverfahren kann eine Lichtleiterplatte 14 erhalten werden, welche das weiße Papierblatt 46 sowie die Koppelschicht 48 mit Reflexionspartikeln 50 trägt. Mit Extrusionsverfahren können Lichtleiterplatten 14 gewonnen werden, welche zwischen 2 m und 3 m breit und zwischen 3 m und 10 m lang sind.

Die Koppelschicht 48 aus Harz zwischen dem weißen Papierblatt 46 und der zweiten Hauptfläche 18 der Lichtleiterplatte 14 ist zwischen 1 µm und 1000 µm, bevorzugt zwischen 50 µm und 250 µm und stärker bevorzugt zwischen 100 µm und 200 µm dick. Die oben angegebene Wirkung der Koppelschicht 48 aus Silikonöl oder aus einem Harz mit den Reflexionspartikeln 50 hängt auch von der Dicke dieser Schicht ab, so dass die gewünschten Eigenschaften auch über die Wahl einer bestimmten Dicke derselben angepasst werden kann.

Das weiße Papierblatt 46 hat eine Flächengewicht von 50 g/m² bis 200 g/m², bevorzugt von 80g/m² bis 170 g/m², bevorzugter von 100 g/m² bis 150 g/m² und insbesondere bevorzugt von 120 g/m².

Als Reflektorsubstrat kann anstelle des weißen Papierblatts 46 beispielsweise auch eine weiße Kunststofffolie oder eine Spiegelfolie vorgesehen sein, welche sich mit der Koppelschicht 48 aus Silikonöl oder einem Harz vertragen.

In einer Abwandlung sind in der Koppelschicht 48 aus Silikonöl oder aus einem Harz Leuchtstoffpartikel, insbesondere lumineszierende Partikel, und insbesondere phosphoreszierende Partikel, homogen verteilt, welche nicht eigens dargestellt sind. In diesem Fall kann die Beleuchtungseinheit 10 auch ohne aktive Leuchtmittel Licht abstrahlen, dessen Spektrum durch eine entsprechende Wahl der Lumineszenzpartikel oder eines Gemisches derartiger Lumineszenzpartikel eingestellt werden kann.

Auf der von der Koppelschicht 48 aus Silikonöl oder aus einem Harz abliegenden Seite des Papierblatts 46 ist eine zusätzliche Reflexionsschicht 52 vorgesehen, welche beispielsweise in Form einer selbstklebenden Spiegelfolie oder auch einer weißen Kunststofffolie vorgesehen sein kann.

Diese Sandwichanordnung aus der Reflexionsschicht 52, dem Reflektorsubstrat 46 sowie der Koppelschicht 48 aus Silikonöl oder aus einem Harz wird durch das Gehäuse 42 abgedeckt, wobei dessen Boden 54 an der Reflexionsschicht 52 anliegt. Das Gehäuse 42, das Reflektorsubstrat 46, die Koppelschicht 48 mit oder ohne Reflexionspartikeln 50 und die Reflexionsschicht 52 bilden gemeinsam eine Reflexionseinrichtung 56 für das Licht, welches die Lichtleiterplatte 14 auf deren zweiten Hauptfläche 18 verlässt.

Die von der Reflexionsschicht 52 abliegende Außenseite 58 des Gehäusebodens 54 trägt eine Energieversorgungseinheit 60 mit einem Gehäuse 62. Letzteres weist eine Stirnwand 64 auf, welche an der Außenfläche 58 des Bodens 54 des Gehäuses 42 der Reflexionseinrichtung 56 anliegt.

Zwischen den Seitenwänden 66 des Gehäuses 62 ist ein Zwischenboden 68 angeordnet, so dass das Gehäuse 62 der Energieversorgungseinheit 60 einen Innenraum 70 einerseits und einen nach außen offenen Aufnahmeraum 72 begrenzt. In dem Innenraum 70 ist eine Energiespeichereinheit 74 angeordnet. Diese kann beispielsweise in Form eines entsprechenden Kondensators mit ausreichender Ladekapazität oder in Form einer wiederaufladbaren Batterie vorliegen. Eine wiederaufladbare Batterie kann z.B. mehrere Akkumulatorzellen umfassen, die in Reihe geschaltet sind.

In dem Aufnahmeraum 72 ist ein an und für sich bekanntes Solarzellen-Paneel 76 angeordnet, welches in den Figuren lediglich schematisch angedeutet ist. Dieses umfasst mehrere Solarzellen 78, von denen in den Figuren lediglich jeweils eine mit einem Bezugszeichen versehen ist.

Das Solarzellen-Paneel 76 steht über Leitungen 80a, 80b mit Energieverteilereinheiten 82a, 82b in Verbindung. Diese sind über Leitungen 84a, 84b mit der Energiespeichereinheit 74 einerseits und über Leitungen 86a, 86b mit den Halbleiter-Leuchtchips 32 andererseits verbunden.

Die Energieverteilereinheiten 82a, 82b koordinieren und kontrollieren die Energieversorgung der Halbleiter-Leuchtchips 32. Wenn Licht auf die Solarzellen 78 trifft und das Solarzellen-Paneel 76 elektrischen Strom erzeugt, sorgen die Energieverteilereinheiten 82a, 82b dafür, dass so lange ein Teil davon der Energiespeichereinheit 74 zugeführt wird, bis diese vollständig aufgeladen ist. Der andere Teil wird zur Energieversorgung der Halbleiter-Leuchtchips 32 verwendet und diesen entsprechend zugeführt. Wenn kein Licht auf die Solarzellen 78 trifft, beispielsweise bei Dunkelheit, werden die Halbleiter-Leuchtchips 72 über die Energieverteilereinheit 82 aus der Energiespeichereinheit 74 gespeist.

Die Energieverteilereinheit 82 kann zugleich als Steuereinheit arbeiten, in welche z.B. Zeiten einprogrammiert sein können, zu denen die Halbleiter-Leuchtchips 32 mit Spannung beaufschlagt werden sollen. So kann eine unter freiem Himmel angebrachte Beleuchtungseinheit 10 beispielsweise derart eingestellt werden, dass ihre Energiespeichereinheit 74 tagsüber mit der durch die Solarzellen 78 erzeugten Energie aufgeladen werden, ohne dass die Halbleiter-Leuchtchips 32 mit Spannung beaufschlagt werden. Zu einer bestimmten Uhrzeit wird dann den Halbleiter-Leuchtchips 32 die von den Solarzellen 78 erzeugte Energie ganz oder teilweise oder Energie aus der Energiespeichereinheit 74 zugeführt, wie es oben erläutert wurde.

Die Energieversorgungseinheit 60 ist insgesamt als flachbauendes Paneel-Bauteil ausgebildet. Auf diese Weise kann die Beleuchtungseinheit 10 insgesamt sehr flach gefertigt werden. Die Energieversorgungseinheit 60 hat parallel zur Außenfläche 58 des Gehäuses 42 der Lichtleitereinrichtung 12 Abmessungen, die der Erstreckung dieser Außenfläche 58 in etwa entsprechen. Somit weisen die Lichtleitereinrichtung 12 und die Energieversorgungseinheit 60 von der Sichtseite 16 der Beleuchtungseinheit 10 her gesehen in etwa die gleiche Außenkontur auf.

Durch die Ausbildung der Energieversorgungseinheit 60 als Paneel-Bauteil kann erreicht werden, dass die flache Bauweise der Lichtleitereinrichtung 12 weitergeführt wird und die Dicke der Beleuchtungseinheit 10 insgesamt beispielsweise lediglich zwischen 1 cm und 3 cm beträgt. Dies ist auch bei einer großflächigen Beleuchtungseinheit 10 möglich.

Die Lichtleitereinrichtung 12 und die Energieversorgungseinheit 60 sowie die Gehäuse 26 und 28 mit den Halbleiter-Leuchtchips 32 sind von einem Rahmen 88 eingefasst. Dieser begrenzt zusammen mit den entsprechenden Außenflächen der Lichtleitereinrichtung 12, der Energieversorgungseinheit 60 und der Gehäuse 26, 28 an den Außenrändern 22 bzw. 24 der Lichtleiterplatte 14 zwei gegenüberliegende Innenräume 90 parallel zu den Außenrändern 22 bzw. 24 der Lichtleiterplatte 14. In Letzteren sind die Energieverteilereinheiten 82a, 82b neben den Gehäusen 26 bzw. 28 mit den Halbleiter-Leuchtchips 32 angeordnet.

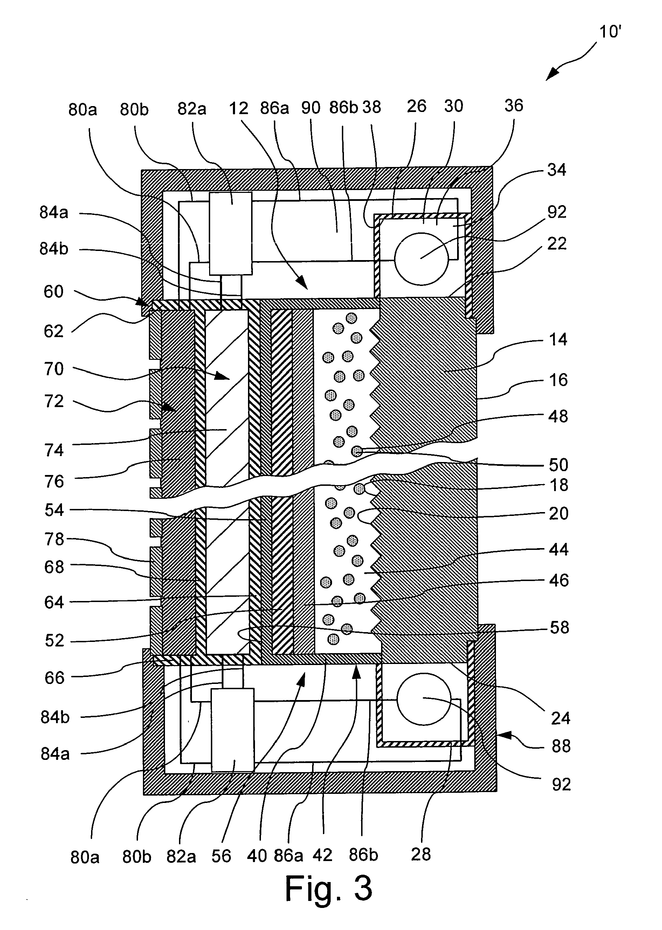

In Figur 3 ist als weiteres Ausführungsbeispiel eine Beleuchtungseinheit 10' gezeigt. Bereits zu den Figuren 1 und 2 erläuterte Komponenten tragen in Figur 2 dieselben Bezugszeichen.

Die Beleuchtungseinheit 10' unterscheidet sich von der Beleuchtungseinheit 10 nach den Figuren 1 und 2 dadurch, dass als Leuchtmittel nicht Halbleiter-Leuchtchips 32, sondern Leuchtröhren 92 vorgesehen sind. Die Leuchtröhren 92 können als Kompaktleuchtstofflampen ausgebildet sein, welche auch unter den Begriffen Energiesparlampen oder CFL-Röhren bekannt sind. Auch Leuchtstofflampen oder Kaltkathodenröhren kommen als Leuchtröhren 92 in Betracht. Kaltkathodenröhren sind auch unter dem Begriff CCFL-Röhren bekannt.

Hier bevorzugt verwendete CFL-Röhren können einen Durchmesser von 5 mm bis 25 mm, vorzugsweise von 5 mm bis 8 mm, und eine Länge von 5 cm bis 150 cm, vorzugsweise von 8 cm bis 40 cm, haben.

CCFL-Röhren, welche bei der Beleuchtungseinheit 10' eingesetzt werden sollen, können einen Durchmesser von 2 mm bis 6 mm, vorzugsweise von 3 mm bis 4 mm, und eine Länge von 4 cm bis 120 cm, vorzugsweise von 8 cm bis 55 cm, haben.

Die Leuchtröhren 92 können mit verschiedenen Gasen gefüllt sein, beispielsweise mit Neon, Helium, Stickstoff, Kohlendioxid, Krypton, Argon, gegebenenfalls Argon mit Quecksilber, und dergleichen, wobei alterungsbeständige Füllgase vorgezogen werden.

Die Röhrenkörper der Leuchtröhren 92 können aus Glas oder Kunststoff gefertigt und in letzterem Fall flexibel sein.

In Figur 3 ist in jedem Gehäuse 26 bzw. 28 jeweils eine Leuchtstoffröhre 92 zu erkennen, welche über die Versorgungsleitungen 86a und 86b mit Spannung beaufschlagbar sind. In einer Abwandlung können in jedem Gehäuse 26 und 28 auch jeweils zwei oder mehr Leuchtröhren 92 angeordnet sein, beispielsweise drei CCFL-Röhren, von denen die Erste rotes Licht, die Zweite grünes Licht und die Dritte blaues Licht erzeugen. Dazu kann das Glas oder der Kunststoff der Leuchtröhren 92 entsprechend eingefärbt sein, oder die Farbe des erzeugten Licht wird über die entsprechende Wahl der Gasfüllung der Leuchtröhren 92 eingestellt.

Wie in Figur 3 zu erkennen ist, sind in den Gehäusen 26 bzw. 28 der Beleuchtungseinheit 10' im Gegensatz zu der in den Figuren 1 und 2 gezeigten Beleuchtungseinheit 10 kein Silikonöl und keine Leuchtstoffpartikel vorgesehen. In einer Abwandlung ist jedoch auch dieses vorgesehen, wenn eine Farbtransformation des von der Leuchtröhre 92 erzeugten Lichts gewünscht wird.

Bei einer nicht eigens gezeigten Abwandlung der Beleuchtungseinheit 10' können Leuchtröhren 92 auch dadurch gebildet sein, dass in den Außenrändern 22 und 24 der Lichtleiterplatte 14 mit beispielsweise Krypton gefüllte gestreckte Hohlräume, z.B. Nuten, vorgesehen sind, welche nach außen mittels einer Spiegelfolie gasdicht abgeschlossen sind, wobei zum Betrieb einer derartigen Leuchtröhre notwendige Elektroden in diese Nuten hineinragen. Auch eine einzige Nut ist möglich, welche um den Umfang der Lichtleiterplatte 14 herum verläuft.

Wie oben erwähnt, ist die zweite Hauptfläche 18 der Lichtleiterplatte 14 angeraut. Diese Oberflächenrauhigkeit liegt in oder unter der Größenordnung der Wellenlänge des Lichts, welches von der Reflexionseinrichtung 56 auf sie reflektiert wird. Vorzugsweise liegt die Rauhigkeit in der Größenordnung von 100 µm bis 500 µm, bevorzugt von 200 µm bis 400 µm und bevorzugter von 300 µm bis 500 µm.

Durch diese Oberflächenrauhigkeit der zweiten Hauptfläche 18 der Lichtleiterplatte 14 wird eine Streuung erzielt, wodurch das die Lichtleiterplatte 14 über ihre erste Hauptfläche 16 bzw. die Beleuchtungseinheit 10, 10' über ihre Sichtfläche 16 verlassenden Licht gleichmäßiger wird.

Bei der Beleuchtungseinheit 10 steht das Silikonöl 30, welches die Halbleiter-Leuchtchips 32 umgibt, in unmittelbarem Kontakt zum entsprechenden Außenrand 22 bzw. 24 der Lichtleiterplatte 14. Dadurch ist gewährleistet, dass das von den Halbleiter-Leuchtchips 32 emittierte Licht zuverlässig in die Lichtleiterplatte 14 eingekoppelt wird.

Eine andere Möglichkeit, die Farbe des von der Beleuchtungseinheit 10 abgegebenen Lichts einzustellen, besteht darin, verschiedenartige Halbleiter-Leuchtchips 32 zu verwenden.

Beispielsweise werden überwiegend Halbleiter-Leuchtchips 32 eingebaut, welche Blaulicht emittieren. Zusätzlich kommen jedoch noch Halbleiter-Leuchtchips 32 zum Einsatz, welche im Roten und im Grünen emittieren. Durch eine entsprechende Abstimmung, auch was die jeweilige Lichtleistung angeht, kann so eine Farbeinstellung, insbesondere ein weitgehender Weißabgleich, erzielt werden.

Auch können Halbleiter-Leuchtchips 32 eingesetzt werden, welche UV-Licht emittieren. Dann sollte auf die erste Hauptfläche 16 der Lichtleiterplatte 14 jedoch ein UV-Filter aufgebracht werden, wenn das erzeugte Licht für das menschliche Auge bestimmt ist.

Die oben erläuterten Beleuchtungseinheiten 10, 10' können als Leuchtmittel, beispielsweise zur Beleuchtung von Innenräumen verwendet werden. Nicht nur Innenräume von Gebäuden, auch Innenräume von Schiffen, Flugzeugen, Kraftfahrzeugen und dergleichen kommen in Betracht.

Durch die Verwendung von Solarzellen als Energiequelle ist auch insbesondere an Straßen- und Leitplankenbeleuchtungen zu denken.

Es ist in der Regel ausreichend, wenn bei einer Kantenlänge der Außenränder 22 bzw. 24 der Lichtleiterplatte 14 von annähernd 50 cm jeweils vier Halbleiter-Leuchtchips 32 entlang des entsprechenden Außenrands 22, 24 vorgesehen sind.

Die Beleuchtungseinheiten 10, 10' können grundsätzlich mit beliebigen Randlängen gefertigt werden, zum Beispiel mit Abmessungen im Hinblick auf Breite x Länge von 10 cm x 30 cm, 50 cm x 50 cm oder 50 cm x 100 cm.

## Patentansprüche

1. Beleuchtungsvorrichtung mit
a) einer Lichtleitereinrichtung (12), welche eine Licht abgebende Sichtfläche (16) umfasst;
b) Leuchtmitteln (32; 92), welche derart angeordnet sind, dass von den Leuchtmitteln (32; 92) emittiertes Licht in die Lichtleitereinrichtung (12) eingekoppelt wird;
c) einer Energieversorgungseinrichtung (60), welche die Leuchtmittel (32; 92) mit Energie versorgt,
**dadurch gekennzeichnet, dass**
d) die Energieversorgungseinrichtung (60) als Paneel-Bauteil ausgebildet ist und von einer weiteren Außenfläche (58) der Lichtleitereinrichtung (12) getragen ist.

2. Beleuchtungsvorrichtung nach Anspruch 1, **dadurch gekennzeichnet, dass** das Paneel-Bauteil (60) parallel zur weiteren Außenfläche (58) der Lichtleitereinrichtung (12) Abmessungen hat, die der Erstreckung der weiteren Außenfläche (58) der Lichtleitereinrichtung (12) in etwa entsprechen.

3. Beleuchtungsvorrichtung nach Anspruch 1 oder 2, **dadurch gekennzeichnet, dass** die Energieversorgungseinrichtung (60) eine Solarzelleneinrichtung (76) umfasst.

4. Beleuchtungsvorrichtung nach Anspruch 3, **dadurch gekennzeichnet, dass** die Solarzelleneinrichtung (76) ein flaches Solarzellen-Paneel (76) umfasst.

5. Beleuchtungsvorrichtung nach einem der Ansprüche 1 bis 4, **dadurch gekennzeichnet, dass** die Energieversorgungseinrichtung (60) eine Energiespeichereinheit (74) umfasst.

6. Beleuchtungsvorrichtung nach Anspruch 5, **dadurch gekennzeichnet, dass** die Energiespeichereinheit (74) als Paneel-Bauteil ausgebildet ist.

7. Beleuchtungsvorrichtung nach Anspruch 5 oder 6, **dadurch gekennzeichnet, dass** die Energiespeichereinheit (74) eine wieder aufladbare Batterie umfasst.

8. Beleuchtungsvorrichtung nach Anspruch 5 oder 6, **dadurch gekennzeichnet, dass** die Energiespeichereinheit (74) einen Kondensator umfasst.

9. Beleuchtungsvorrichtung nach einem der Ansprüche 1 bis 8, **dadurch gekennzeichnet, dass** die Lichtleitereinrichtung (12) ein Lichtleiterelement (14) umfasst, welches durch eine erste Hauptfläche (16) und eine zu dieser parallel beabstandete zweite Hauptfläche (18) begrenzt ist.

10. Beleuchtungsvorrichtung nach Anspruch 9, **dadurch gekennzeichnet, dass** auf der Seite der zweiten Hauptfläche (18) des Lichtleiterelements (14) eine Reflexionseinrichtung (56) vorgesehen ist, welche Licht in Richtung auf das Innere des Lichtleiterelements (14) reflektiert.

11. Beleuchtungsvorrichtung nach Anspruch 10, **dadurch gekennzeichnet, dass** die Reflexionseinrichtung (56) eine Reflexionsschicht (52), insbesondere eine Spiegelfolie oder eine weiße Kunststofffolie, umfasst.

12. Beleuchtungsvorrichtung nach Anspruch 10 oder 11, **dadurch gekennzeichnet, dass** die Reflexionseinrichtung (56) ein Reflektorsubstrat (46) umfasst, welches auf der Seite der zweiten Hauptfläche (18) des Lichtleiterelements (14) angeordnet ist.

13. Beleuchtungsvorrichtung nach Anspruch 12, **dadurch gekennzeichnet, dass** die Reflexionseinrichtung (56) eine Koppelschicht (48) aus Silikonmaterial, insbesondere aus dickflüssigem Silikonöl oder aus einer elastischen Silikonmasse, oder aus einem Harz, insbesondere aus einem Epoxidharz oder aus einem Polyesterharz, umfasst, welche die zweite Hauptfläche (18) des Lichtleiterelements (14) unmittelbar kontaktiert.

14. Beleuchtungsvorrichtung nach Anspruch 12 oder 13,
**dadurch gekennzeichnet, dass** das Reflektorsubstrat (46) ein weißes Papierblatt (46) ist.

15. Beleuchtungsvorrichtung nach Anspruch 14, **dadurch gekennzeichnet, dass** das Papierblatt (46) ein Flächengewicht von 50 g/m² bis 200 g/m², bevorzugt von 80 g/m² bis 170 g/m², bevorzugter von 100 g/m² bis 150 g/m² und insbesondere bevorzugt von 120 g/m² hat.

16. Beleuchtungsvorrichtung nach einem der Ansprüche 10 bis 13, **dadurch gekennzeichnet, dass** das die Reflexionseinrichtung (56) Reflexionspartikel (50) umfasst.

17. Beleuchtungsvorrichtung nach Anspruch 16, **dadurch gekennzeichnet, dass** die Reflexionspartikel (50) eine oder mehrere der nachfolgenden Verbindungen umfassen: Zinksulfid, Scandiumoxid, Lanthanoxid, Ceroxid, Neodymoxid, Samariumoxid, Europiumoxid, Gadoliniumoxid, Dysprosiumoxid, Holmiumoxid, Erbiumoxid, Thuliumoxid, Ytterbiumoxid, Lutetiumoxid.

18. Beleuchtungsvorrichtung nach Anspruch 17, **dadurch gekennzeichnet, dass** die Reflexionspartikel (50) aus Scandiumoxid oder aus Zinksulfid sind.

19. Beleuchtungsvorrichtung nach einem der Ansprüche 16 bis 18 unter Rückbezug auf einen der Ansprüche 12 bis 14, **dadurch gekennzeichnet, dass** die Reflexionspartikel (50) in der Koppelschicht (48) aus Silikonmaterial oder aus einem Harz weitgehend homogen verteilt sind.

20. Beleuchtungsvorrichtung nach einem der Ansprüche 10 bis 19, **dadurch gekennzeichnet, dass** die zweite Hauptfläche (18) des Lichtleiterelements (14) wenigstens bereichsweise eine Oberflächenrauhigkeit in der Größenordnung von 100 µm bis 500 µm, bevorzugt von 200 µm bis 500 µm, bevorzugter von 300 µm bis 500 µm und besonders bevorzugt in der Größenordnung der Wellenlänge des Lichts, welches von der Reflexionseinrichtung (53) auf sie reflektiert wird, aufweist.

21. Beleuchtungsvorrichtung nach einem der Ansprüche 10 bis 20, **dadurch gekennzeichnet, dass** das Lichtleiterelement (14) aus Glas oder Acrylglas oder Epoxidharz gefertigt ist.

22. Beleuchtungsvorrichtung nach einem der Ansprüche 1 bis 21, **dadurch gekennzeichnet, dass** mindestens einer Seite der Leuchtmittel (32; 92) wenigstens teilweise eine Reflexionsschicht (52) gegenüberliegt, welche von den Leuchtmitteln (32; 92) emittiertes Licht in Richtung auf das Innere des Lichtleiterelementes (14) reflektiert.

23. Beleuchtungsvorrichtung nach einem der Ansprüche 1 bis 22, **dadurch gekennzeichnet, dass** die Leuchtmittel (32; 92) zumindest teilweise über ein lichtleitendes Material (34) mit dem Lichtleiterelement (14) gekoppelt sind.

24. Beleuchtungsvorrichtung nach Anspruch 23, **dadurch gekennzeichnet, dass** das lichtleitende Material (34) ein Silikonmaterial, insbesondere ein Silikonöl oder eine elastische Silikonmasse ist.

25. Beleuchtungsvorrichtung nach einem der Ansprüche 1 bis 24, **dadurch gekennzeichnet, dass** die Leuchtmittel (32; 92) wenigstens teilweise von Leuchtstoffpartikeln (36), vorzugsweise homogen verteilten Leuchtstoffpartikeln (36), umgeben sind, welche von den Leuchtmitteln (32; 92) emittiertes Licht absorbieren und ihrerseits Licht einer anderen Wellenlänge emittieren.

26. Beleuchtungsvorrichtung nach Anspruch 25 unter Rückbezug auf Anspruch 22 oder 23, **dadurch gekennzeichnet, dass** die Leuchtstoffpartikel (36) in dem lichtleitenden Material (34) verteilt sind, vorzugsweise homogen verteilt sind.

27. Beleuchtungsvorrichtung nach einem der Ansprüche 1 bis 26, **dadurch gekennzeichnet, dass** die Leuchtmittel (32) wenigstens einen Halbleiter-Leuchtchip (32) umfassen, welcher bei Spannungsbeaufschlagung Licht emittiert.

28. Beleuchtungsvorrichtung nach einem der Ansprüche 1 bis 26, **dadurch gekennzeichnet, dass** die Leuchtmittel (92) wenigstens eine Leuchtröhre (92) umfassen.
